# FASCICULE DE BREVET EUROPEEN

(11) **EP 2 236 897 B1**
(45) Date de publication et mention de la délivrance du brevet: **18.03.2015**
(21) Numéro de dépôt: 10290122.0
(22) Date de dépôt: 10.03.2010
(51) Int. Cl.: F16L 5/10, F16L 59/12, E04F 17/02, E04D 13/14

(54) **Equipement pour isoler le pourtour d'une section de conduit**
Ausrüstung zum Isolieren der Umrandung eines Leitungsabschnitts
Equipment for isolating the perimeter of a pipe section

(30) Priorité: 10.03.2009 FR 0901083; 17.07.2009 FR 0954982
(43) Date de publication de la demande: 06.10.2010
(73) Titulaire: Poujoulat, 79360 Granzay Gript (FR)
(72) Inventeur: Pierre, Jean Luc, 79460 Magne (FR); Thomas, Stéphane, 79460 Magne (FR); Coirier, Frédéric, 92380 Garches (FR); Druette, Lionel, 79180 Chauray (FR); Cant, Francis, 79000 Niort (FR)
(74) Mandataire: Michelet, Alain

(56) Documents cités:
- EP-A1- 0 621 435
- GB-A- 2 111 624
- US-A- 3 818 949

## Description

La présente invention concerne le domaine général de la fumisterie. Elle concerne plus particulièrement un équipement pour isoler le pourtour d'une section de conduit, notamment un conduit d'évacuation de fumées, par exemple, mais non exclusivement, au niveau d'une zone de traversée de paroi (plancher, plafond, mur intérieur ou extérieur, traversée de toiture ...) séparant une zone chaude et une zone froide.

Le document EP-A-0 621 435 divulgue un équipement selon le préambule de la revendication 1.

L'isolation d'une section de conduit n'est pas toujours une opération facile à réaliser, en particulier après la pose de ce conduit.

La présente invention propose un équipement technique de structure simple, qui peut être aisément rapporté autour de la section de conduit concernée, pour obtenir une rupture de pont thermique efficace.

Conformément à l'invention, cet équipement apte à être rapporté autour d'une section de conduit pour réaliser son isolation est constitué d'une coquille isolante comprenant une couche tubulaire de matériau isolant adaptée pour entourer ledit conduit, formée de deux demi-coques, chacune demi-cylindrique, lesquelles demi-coques sont associées à une jaquette de maintien constituée d'une feuille métallique flexible conformée en cylindre ouvert, munie de deux bordures libres qui sont équipées de moyens de fermeture amovibles.

Le matériau isolant utilisé est de préférence de la laine de roche, ayant avantageusement une densité de 90 kg/m³.
De préférence, l'épaisseur du cylindre isolant est comprise entre 8 et 15 cm, et son diamètre externe est de l'ordre de 40 à 45 cm.

Selon un mode de réalisation particulier, les moyens de fermeture amovibles de la jaquette consistent en des organes de crochetage formés chacun d'un anneau associé à un levier, lequel anneau, fixé sur l'une des bordures de ladite jaquette, est adapté pour coopérer avec un crochet fixé sur l'autre bordure.

La face externe de la jaquette comporte avantageusement une poignée pour faciliter sa préhension.

Cette poignée est de préférence réalisée par pliage d'une platine dont les extrémités sont soudées sur ladite jaquette.

Selon une autre particularité, la jaquette a une hauteur un peu inférieure à la hauteur du cylindre isolant, de manière à permettre à ce cylindre isolant de déborder légèrement de part et d'autre.

Cette structure particulière d'équipement facilite le positionnement de la coquille isolante sur le conduit, une fois ce dernier convenablement posé.

L'invention sera encore illustrée, sans être aucunement limitée, par la description suivante en relation avec les dessins annexés dans lesquels :
- la figure 1 est une vue en coupe d'une coquille isolante conforme à l'invention, mise en place sur le conduit de réception, au dessus d'un orifice de traversée de paroi associé à une embase de comblement et d'étanchéité;
- la figure 2 est une vue en perspective par-dessous d'une structure possible de l'embase de comblement et d'étanchéité illustrée sur la figure 1, représentée isolément ;
- la figure 3 est une vue en coupe de l'embase de comblement et d'étanchéité de la figure 2;
- la figure 4 montre l'embase de comblement et d'étanchéité des figures 2 et 3, vue par-dessus, avec ses deux parties constitutives désassemblées ;
- la figure 5 est une coupe transversale du joint équipant la face arrière de l'embase des figures 2 à 4 ;
- la figure 6 est une coupe transversale du joint équipant la bordure d'orifice de l'embase des figures 2 à 4 ;
- la figure 7 est une vue en perspective de la coquille isolante seule, illustrée ici avec sa jaquette de maintien non complètement fermée ;
- la figure 8 est une vue par-dessus, côté face arrière, d'une variante de réalisation possible de l'embase de comblement et d'étanchéité ;
- la figure 9 est une vue en coupe selon le plan de coupe 9-9 de la figure 8 ;
- la figure 10 est une vue en perspective éclatée de l'embase des figures 8 et 9, montrant ses différents éléments constitutifs ;
- la figure 11 montre l'embase des figures 8 à 10 en position autour d'un conduit de réception ;
- la figure 12 est une vue en coupe transversale d'une variante de réalisation possible de l'embase de comblement et d'étanchéité selon l'invention ;
- la figure 13 est une vue agrandie d'un détail de la figure 12.

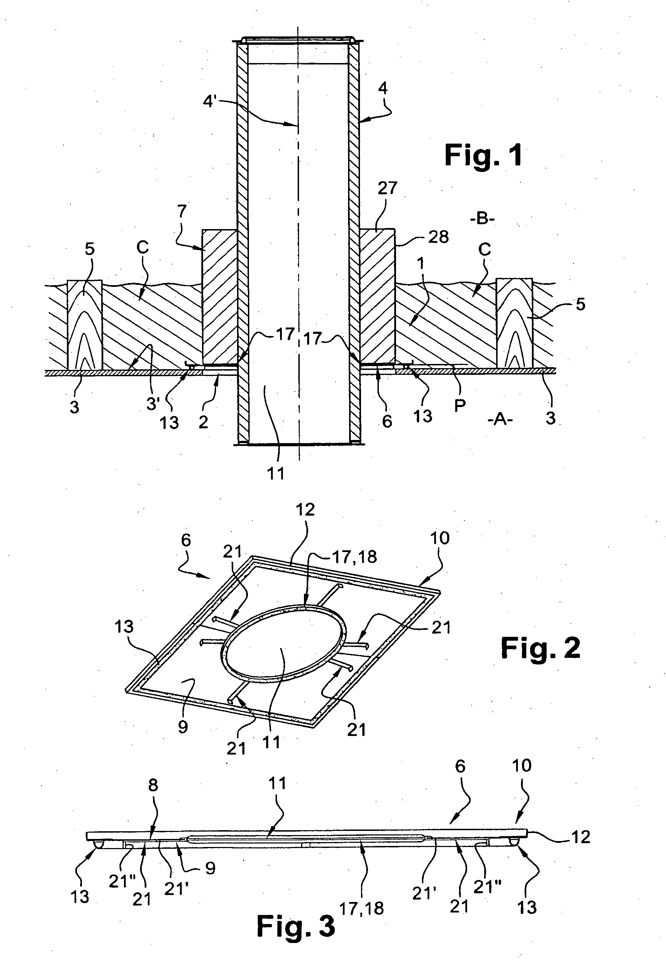

L'équipement 1 illustré sur la figure 1 est adapté pour combler, étancher et isoler le pourtour d'un orifice circulaire 2 ménagé dans une paroi 3 (ici un plafond), au travers duquel passe un conduit 4. Le conduit 4 est un conduit tubulaire à section circulaire qui est centré ou approximativement centré dans l'orifice de passage 2 ; son axe 4' s'étend perpendiculairement ou approximativement perpendiculairement à la paroi 3.
Le conduit 4 peut être un conduit d'évacuation de fumées provenant d'un appareil de chauffage.

La paroi 3 est ici horizontale et sépare deux volumes, l'un inférieur A (par exemple une zone chaude telle qu'une pièce d'habitation) et l'autre supérieur B (par exemple les combles sous toiture de l'habitation). Elle peut être réalisée en plaques de plâtre fixées sur des poutrelles en bois 5.

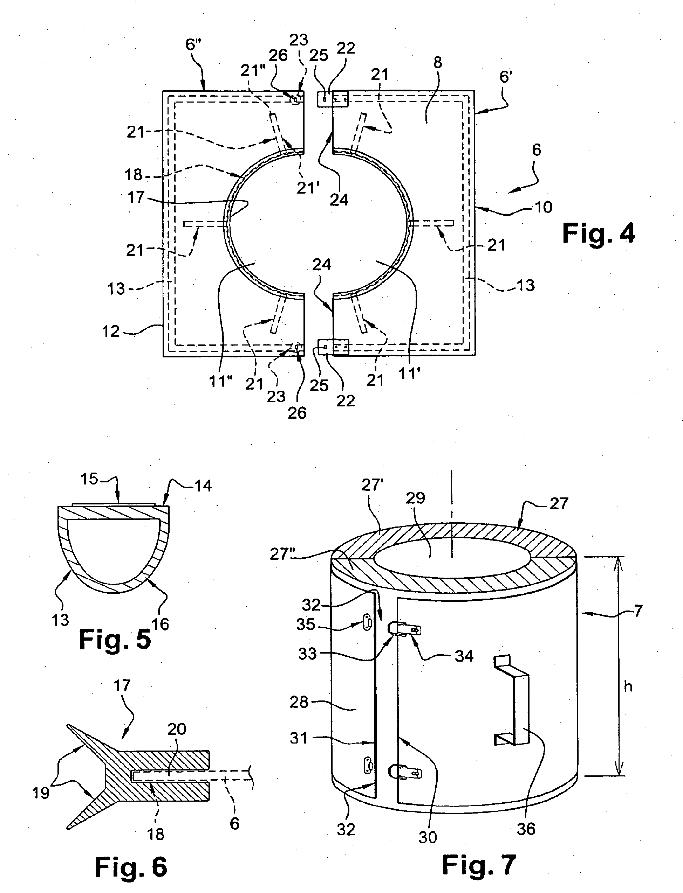

L'équipement 1 comprend ici :
- une embase de comblement 6, en forme de plaque, détaillée sur les figures 2 à 6, qui est posée sur la face d'appui 3' de la paroi 3 (face de dessus) en réalisant l'étanchéité, d'une part avec ladite paroi 3, et d'autre part avec le conduit 4, et
- une coquille isolante 7 conforme à l'invention, détaillée sur la figure 7, posée sur ladite embase de comblement 6 et venant ceinturer ledit conduit 4 sur une partie de sa hauteur.

Comme on peut le voir sur les figures 2 à 4, l'embase de comblement 6 présente ici une forme générale carrée (ayant par exemple 50 à 60 cm de côté), avec une face avant 8 et une face arrière 9 ; elle est délimitée par une bordure extérieure 10 et comporte un orifice interne 11 de forme générale circulaire.

Tel qu'illustré sur la figure 4, cette embase 6 est en fait constituée de deux demi-plaques 6' et 6" munies chacune d'une réservation 11', 11" de forme demi-circulaire ; des moyens d'assemblage, détaillés ci-dessous, sont prévus pour solidariser entre elles les deux demi-plaques 6' et 6" et reconstituer ainsi l'embase 6 des figures 1, 2 et 3, avec l'orifice central circulaire 11 (formé de l'association des deux réservations complémentaires 11' et 11 ").

L'embase 6 est par exemple réalisée en feuille d'acier galvanisé de 1 mm d'épaisseur ; elle est avantageusement munie d'un pli de rigidification périphérique 12 (ayant par exemple 10 mm de hauteur) qui s'étend à l'équerre sur tout le long de sa bordure périphérique 10, orienté du côté de sa face avant 8.

Un joint d'étanchéité 13 est fixé sur tout le pourtour de la face arrière 9 de l'embase 6, à quelques millimètres (par exemple 10 mm) de la bordure périphérique 10. Ce joint 13, détaillé sur la figure 5 (vu en section) est en forme de bourrelet tubulaire muni d'une face plane 14 équipée d'un adhésif 15 pour sa fixation contre ladite face arrière 9, et dont l'extrémité opposée 16 est à section demi-circulaire. Ce joint périphérique 13, réalisé par exemple en caoutchouc cellulaire, peut avoir une hauteur comprise entre 5 et 12 mm et une largeur de l'ordre de 10 à 15 mm.

Un second joint d'étanchéité 17 est prévu sur la bordure interne 18 délimitant l'orifice 11. Ce joint 17, détaillé sur la figure 6 (vu en section) comprend, d'un côté, deux lèvres d'étanchéité superposées 19, et de l'autre côté, une rainure 20 pour son encastrement sur la bordure 18 de l'embase 6 délimitant l'orifice 11 ; il peut être réalisé en silicone.

Les joints 13 et 17 sont réalisés en deux parties équipant chacune l'une des demi-plaques 6', 6".

Du côté de sa face arrière 9, l'embase 6 comporte encore des organes 21 servant de repères pour son centrage sur l'orifice de paroi 2. Ces organes de centrage 21, ici au nombre de six, consistent en des languettes rectilignes s'étendant de manière rayonnée, ou sensiblement rayonnée, depuis la bordure d'orifice 18 en direction de la bordure périphérique 10. Ces languettes 21 sont réalisées en métal (acier galvanisé par exemple) ; elles ont une section longitudinale en L dont l'une des ailes 21' est solidarisée par soudage contre la face arrière 9 de l'embase 6, et dont l'autre aile 21", située au niveau de l'extrémité « extérieure » de l'aile 21', s'étend sur chant, dans un plan perpendiculaire à celui de l'embase 6, sur une hauteur de l'ordre de 10 à 15 mm par exemple. L'aile d'extrémité 21" de chaque languette 21 est placée sur un cercle qui est centré sur le centre de l'orifice 11 et dont le diamètre est prévu légèrement inférieur au diamètre de l'orifice de paroi 2.

Les moyens d'assemblage des deux demi-coquilles 6' et 6" sont détaillés sur la figure 4. Ils consistent en deux pattes 22 fixées par exemple par soudage sur l'une des demi-plaques 6' et aptes à être chacune solidarisée avec l'autre demi-plaque 6" par l'intermédiaire d'un clip de maintien 23.
Les pattes 22 sont pour cela fixées au niveau de la bordure d'assemblage 24 de la demi-plaque 6' et elles comportent une partie en saillie, orientée vers l'autre demi-plaque 6" qui est munie d'un premier orifice d'assemblage 25. De son côté, l'autre demi-plaque 6" comporte un second orifice d'assemblage 26 adapté pour venir en superposition avec ledit premier orifice 25 de patte 22, afin d'être traversé par une goupille d'assemblage constitutive dudit clip de maintien 23.
Ce clip de maintien 23, réalisé en matière plastique, peut être du type à goupille constituée de pattes flexibles parallèles munies d'ergots d'encliquetage au niveau de leur extrémité libre.

Les dimensions de l'embase 6 sont adaptées :
- pour que sa bordure périphérique, avec le joint 13, vienne reposer sur la face en regard (face supérieure 3') de la paroi 3, autour de l'orifice de paroi 2, et
- pour qu'une fois l'orifice 11 reconstitué (par l'assemblage des deux demi-plaques 6' et 6"), son diamètre soit très légèrement inférieur au diamètre du conduit 4 (de sorte que le joint 17 vienne prendre convenablement appui contre la face extérieure dudit conduit 4, tout en étant comprimé, afin de réaliser l'étanchéité recherchée).

Dans une variante de réalisation, l'embase de comblement 6 est de forme générale circulaire.

La coquille isolante 7, représentée isolément sur la figure 7, est formée d'une couche tubulaire cylindrique 27 en matériau isolant, ceinturée par une jaquette de maintien 28.

La couche cylindrique de matériau isolant 27 est constituée de l'assemblage de deux demi-coques 27' et 27", toutes deux de forme demi-cylindrique. Leur juxtaposition permet la constitution du cylindre isolant 27, délimitant un orifice interne 29 destiné à recevoir le conduit 4 (le diamètre au repos de l'orifice 29 est légèrement inférieur au diamètre externe du conduit 4, de manière à obtenir une légère compression du matériau isolant lors de la pose de la coquille 7).
Le matériau isolant utilisé peut être de la laine de roche ayant une densité de 90 kg/m³ ; l'épaisseur de la paroi du cylindre 27 est avantageusement comprise entre 8 et 15 cm, de préférence supérieure ou égale à 8 cm ; son diamètre externe peut être de l'ordre de 40 à 45 cm.

La jaquette de maintien 28 consiste en une feuille d'acier galvanisé conformée en cylindre ouvert, dont les deux bordures libres en vis-à-vis 30 et 31 sont équipées de moyens de fermeture amovibles, ici en forme d'organes de crochetage 32 de type « sauterelle ».
Chaque organe de crochetage 32 est formé d'un anneau 33 associé à un levier 34, fixé sur l'une des bordures 30 de la jaquette 28, adapté pour coopérer avec un crochet 35 fixé sur l'autre bordure 31.
Une fois les moyens de fermeture 32 activés, la jaquette 28 positionnée autour du cylindre 27 comprime légèrement le matériau isolant 27 (pour permettre son serrage sur le conduit 4).

Sur la figure 7, on remarque que la face externe de la jaquette 28 comporte une poignée 36 pour faciliter sa manipulation. Cette poignée 36 peut être réalisée par pliage d'une platine en inox, dont les extrémités sont soudées sur la jaquette 28.
On remarque également que la jaquette 28 a une hauteur un peu inférieure à la hauteur du cylindre isolant 27, de manière à permettre audit cylindre 27 de déborder légèrement de part et d'autre.
La hauteur h du cylindre isolant 27 peut, par exemple, être comprise entre 25 et 50 cm, la hauteur de la jaquette 28 lui étant inférieure de 2 à 3 cm.

L'aspect multi-pièces complémentaires de l'embase 6 (deux demi-plaques 6' et 6") et de la coquille isolante 7 (deux demi-coques 27', 27" associées à la jaquette de maintien 28) autorise la pose de l'équipement d'étanchéité et d'isolation 1 après que le conduit 4 ait été installé au travers de l'orifice de paroi 2.

Après réalisation de l'orifice 2 dans la paroi 3, le conduit 4 est mis en place, maintenu par tous moyens de fixation appropriés (non représentés), par exemple un système classique de collier(s) associé(s) à des flasques et cornières de maintien fixés aux entrais de fermette dans le volume B.

Les deux demi-plaques 6' et 6", séparées l'une de l'autre, peuvent alors être mises en place autour du conduit 4 pour constituer l'embase de comblement 6, avec sa face arrière 9 en appui contre la face de dessus 3' de la paroi 3, et avec sa face avant 8 orientée vers le haut. La bordure périphérique 10 de l'embase 6 reconstituée s'étend au-delà de l'encombrement de l'orifice 2 ; le joint d'étanchéité périphérique 13 vient alors s'appuyer contre la face de dessus 3' de la paroi 3, sur le pourtour de l'orifice 2, et le joint d'orifice 17 vient s'appuyer contre la paroi externe du conduit 4. L'embase 6 s'étend dans un plan P qui est perpendiculaire à l'axe 4' du conduit 4 ; les languettes de repérage 21 permettent de situer le conduit 4 au-delà de la distance de sécurité, choisie ou imposée, des matériaux combustibles environnants.
Les deux demi-plaques 6' et 6" sont assemblées entre elles par les moyens d'assemblage 22, 23 (activation des clips de maintien 23 après superposition des couples d'orifices 25-26).

A ce moment, l'étanchéité peut être complétée au moyen de bandes adhésives positionnées sur la ligne d'assemblage 24 des deux demi-plaques 6' et 6", ainsi que sur le pourtour 10 de l'embase 6 reconstituée. Le cas échéant, de telles bandes adhésives peuvent suffire pour obtenir l'étanchéité recherchée entre l'embase 6 et la paroi 3, et le joint périphérique 13 équipant la face arrière 9 peut être supprimé.

On pose ensuite la coquille isolante 7 en installant les deux demi-coques 27' et 27" autour du conduit 4, avec leur face inférieure en appui sur la face avant 8 de l'embase de comblement 6, puis en installant la jaquette de maintien 28 autour du cylindre isolant 27 reconstitué.
Cette mise en place de la jaquette 28 est possible du fait de la flexibilité de la feuille de métal constitutive (les bordures 29 et 30 en regard peuvent être écartées l'une de l'autre d'une distance supérieure au diamètre du cylindre isolant 27).
La jaquette 28 est approximativement centrée sur la hauteur du cylindre isolant 27 et elle est fermée au moyen des organes de crochetage 31, pour assurer une légère compression de ce cylindre isolant 27 contre le conduit 4.
Le diamètre de la coquille isolante 7 est prévu inférieur à la longueur du côté de l'embase de comblement 6, de manière à ce que la face de dessus 8 de cette dernière réceptionne complètement ladite coquille 7.
On peut ensuite mettre en place une isolation C sur la paroi 3, côté zone froide B.
Cette isolation C, par exemple une couche de laine de roche ou de laine de verre, est posée entre les poutrelles de bois 5 ; elle vient en appui contre la coquille isolante 7 et elle vient recouvrir la bordure périphérique de l'embase de comblement 6 (qui déborde de l'encombrement de la coquille 7).
La hauteur h de la coquille 7 est adaptée pour être supérieure à l'épaisseur de la couche d'isolation C envisagée.

On obtient ainsi un équipement de comblement étanche et isolant, très facile à installer et éventuellement aussi à déposer.

La paroi externe de la coquille isolante 7 définit une limite physique qui empêche les matériaux environnants de venir à proximité du conduit 4 (dans la zone ceinturée), participant ainsi, le cas échéant, au respect d'éventuelles normes imposées.

On notera en outre que le serrage de la coquille isolante 7 sur le conduit 4 permet de faire supporter audit conduit le poids de ladite coquille 7, et ainsi de ne pas surcharger le plafond 3.

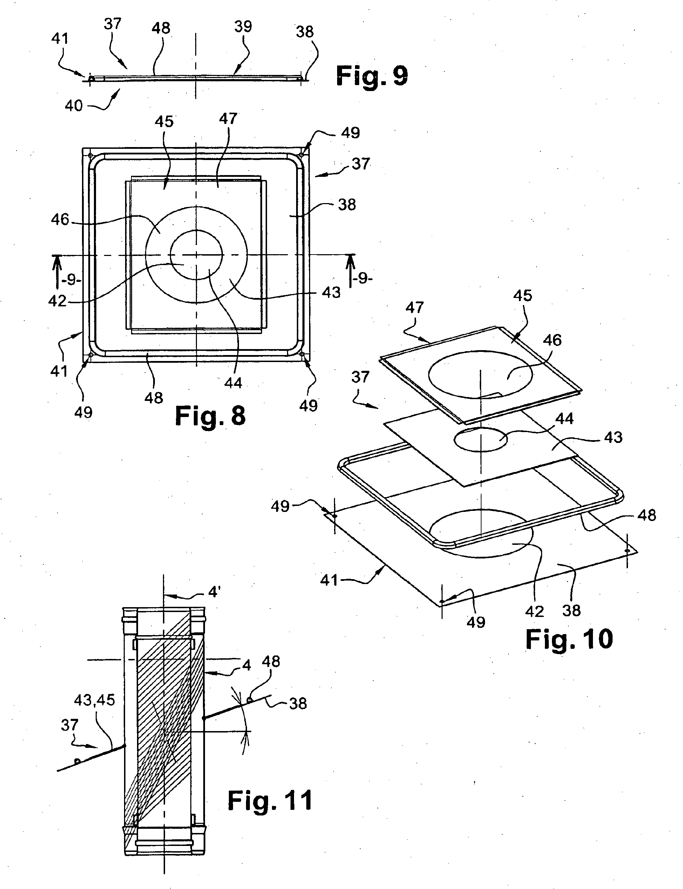

Les figures 8 à 11 illustrent une variante de réalisation de l'embase de l'équipement 1.

Ici, l'embase 37 comprend une plaque rigide 38, d'un seul tenant, ayant une face avant 39 et une face arrière 40, délimitée par un pourtour périphérique 41, de forme générale carrée. Cette plaque 38 est réalisée par exemple en acier galvanisé de 0,8 mm d'épaisseur, et elle comporte un orifice central 42, ici circulaire, dont la bordure est équipée d'un joint 43 en forme de plaque plane de matière élastique, muni d'un orifice central 44.
La plaque de matière élastique formant joint 43 est avantageusement réalisée en silicone ; son épaisseur peut être de l'ordre de 1,5 mm.

Cette plaque de matière élastique 43 est fixée sur l'une des faces de la plaque rigide 38, avec son orifice 44 centré ou sensiblement centré sur l'orifice de plaque 42. Cette fixation peut être obtenue par tout moyen approprié ; cependant, elle est de préférence réalisée par pincement, au moyen d'une plaque rapportée 45 munie d'un orifice central 46.

La plaque de fixation 45 peut être obtenue en acier galvanisé de 0,8 mm d'épaisseur ; elle présente ici une forme générale rectangulaire et sa bordure périphérique extérieure comporte un pli de rigidification à l'équerre 47.
Cette plaque de fixation 45 a des dimensions supérieures à celles de la plaque de matière élastique 43 mais inférieures à celles de la plaque rigide 38 ; son orifice central 46 a une forme et une dimension qui sont identiques ou proches de celles de l'orifice 42 de ladite plaque rigide 38.
La fixation de la plaque de matière élastique 43 est obtenue :
- par sa prise en sandwich et pincement entre la plaque rigide 38 et la plaque de fixation 45, les différents orifices 42, 44 et 46 étant disposés coaxialement ou sensiblement coaxialement, et
- par solidarisation, par exemple au moyen de points de soudure, entre la zone de la plaque de fixation 45 qui déborde de la plaque de matière élastique 43, et la partie en regard de la plaque rigide 38.

Le pli à l'équerre 47 de la plaque de fixation 45 est orienté à l'opposé de la plaque rigide 38, côté face avant 39 de cette dernière.

La solidarisation entre la plaque 38 et la plaque de fixation 45 est réalisée en dehors de l'encombrement de la plaque de joint 43 pour assurer une fixation de cette dernière par un simple phénomène de pincement ; une telle fixation par pincement s'avère à la fois efficace et elle respecte l'intégrité de la plaque de matière élastique 43, ce qui présente un intérêt particulier pour un matériau tel que le silicone, relativement fragile au percement et difficilement collable.

La face d'appui de la plaque 38, destinée à venir en regard de la paroi que l'on souhaite équiper, reçoit un joint périphérique 48, par exemple un joint plat en mousse (ici, c'est la face avant 39 de la plaque 38, constituant aussi la face avant de d'embase 37, qui reçoit le joint périphérique 48).

D'autre part, sur les figures 8 et 10, on remarque la présence d'orifices 49 ménagés au niveau des angles de la plaque rigide 38, adaptés pour permettre la fixation de l'embase 37 sur la paroi que l'on souhaite équiper, par exemple au moyen de vis de fixation.

L'orifice circulaire 44 de la plaque de joint 43 est sous-dimensionné par rapport au diamètre externe du conduit que l'on veut équiper. D'autre part, les orifices 42 et 46, respectivement de la plaque rigide 38 et de la plaque de fixation 41, sont surdimensionnés par rapport à ce diamètre de conduit.

Le positionnement de l'embase 37 pour combler l'orifice 2 de la paroi 3 peut être réalisé avant ou après la pose du conduit.
Dans tous les cas, on introduit l'une des extrémités du conduit 4 dans l'orifice 42, 46 de l'embase 37 et la partie de joint plat 43 qui borde l'orifice 44 vient automatiquement se déformer pour épouser la face externe de ce conduit 4, par ses caractéristiques d'élasticité.
Une telle structure de comblement s'avère très simple à fabriquer et à poser.

On notera que le surdimensionnement des orifices 42 et 46 de l'embase 37 par rapport au diamètre externe du conduit 4 équipé, autorise une pose de l'embase de comblement 37 en pente par rapport au plan perpendiculaire à l'axe 4' du conduit 4, cela grâce à la capacité de déformation du joint plat 43.
La figure 11 illustre un tel positionnement en pente.
Cette structure de comblement présente donc une grande polyvalence de pose.

Les orifices 42 et 46 peuvent avoir une forme autre que circulaire (par exemple carrée, rectangulaire, oblongue ou en ellipse).
Egalement, la plaque rigide 38 et la plaque de fixation 45 peuvent avoir une forme générale autre que carrée ou rectangulaire (par exemple circulaire).

Après la pose de l'embase 37, la coquille isolante 7 est mise en place de la même manière que celle expliquée ci-dessus.
En cas de positionnement en pente de l'embase 37, la base de la coquille isolante 7 est découpée selon un secteur angulaire adapté.

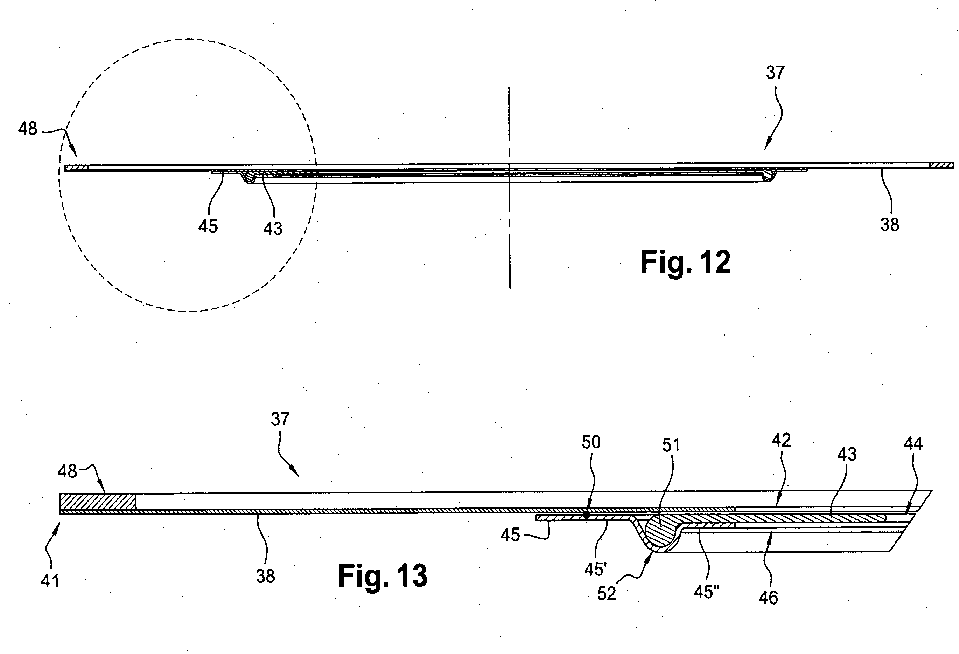

Les figures 12 et 13 illustrent une variante de l'embase de comblement des figures 8 à 11. Dans la description qui suit, pour faciliter la compréhension, les parties structurelles identiques conservent les mêmes repères.
On retrouve donc ici une embase 37 comprenant :
- une plaque rigide 38 avec un orifice central 42
- un joint plat 43, avantageusement en silicone, avec un orifice central 44, et
- une plaque rapportée 45, pour la fixation du joint plat 43 par pincement contre la plaque rigide 38, cette plaque rapportée 45, munie d'un orifice central 46, étant solidarisée avec ladite plaque rigide 38 par points de soudure 50.

Dans cette variante de réalisation, la bordure périphérique extérieure du joint plat 43 comporte un bourrelet ou tore périphérique 51, et la plaque rapportée de fixation 45 comporte un logement 52 conformé pour accueillir ledit bourrelet 51 en vue d'assurer un blocage ou maintien mécanique dudit joint 43, en complément de l'effet de pincement précité.

La solidarisation de la plaque rapportée 45 avec la plaque rigide 38 est réalisée sur une zone 45' de ladite plaque 45 située extérieurement par rapport au logement 52 ; et le pincement mécanique est obtenu par une zone 45" de la plaque 45 située intérieurement par rapport au logement 52 (sur le pourtour de l'orifice 46).

La section du bourrelet 51 peut être circulaire ou approximativement circulaire ; et la section du logement 52 est complémentaire de celle dudit bourrelet 51. Ce bourrelet 51 est avantageusement continu sur toute la périphérie extérieure du joint plat 43 ; sa forme générale peut être circulaire, carrée ou autre et son épaisseur peut être de l'ordre de 5 mm.
La forme générale du logement 52 est adaptée à celle du bourrelet 51.

On notera que la partie intérieure 45" de la plaque 45 s'étend dans un plan qui est légèrement décalé par rapport au plan de la partie extérieure 45', pour tenir compte de l'épaisseur du joint plat 43.

Le bourrelet 51 est avantageusement réalisé monobloc avec le reste du joint plat 43 ; il peut aussi être obtenu au moyen d'une pièce rapportée, solidarisée par tout moyen approprié.

Ce type d'équipement 1 de comblement et d'isolation peut être envisagé pour combler tout orifice traversé par un conduit, que cet orifice soit ménagé dans un mur intérieur ou extérieur, horizontal ou vertical, voire même en pente (traversée de toiture par exemple).

La coquille isolante 7 selon l'invention peut être utilisée pour isoler le pourtour d'une section de conduit d'évacuation de fumée, indépendamment de la présence d'une embase 6, 37 telle que décrite ci-dessus, associée ou non à une structure de comblement d'orifice.

## Revendications

1. Equipement apte à être rapporté autour d'une section de conduit (4) pour réaliser son isolation, en particulier une section de conduit d'évacuation de fumée, lequel équipement est constitué d'une coquille isolante (7) comprenant une couche tubulaire (27) de matériau isolant et compressible adaptée pour entourer ledit conduit (4), formée de deux demi-coques (27', 27") chacune demi-cylindrique, lesquelles demi-coques (27', 27") sont associées à une jaquette de maintien (28) constituée d'une feuille métallique flexible conformée en cylindre ouvert, munie de deux bordures libres (30, 31) qui sont équipées de moyens de fermeture amovibles (32), **caractérisé en ce que** ladite jaquette (28) a une hauteur inférieure à la hauteur dudit cylindre isolant (27), de manière à permettre à ce cylindre isolant (27) de déborder de part et d'autre.

2. Equipement selon la revendication 1, **caractérisé en ce que** la hauteur (h) du cylindre isolant (27) est comprise entre 25 et 50 cm, la hauteur de la jaquette (28) lui étant inférieure de 2 à 3 cm.

3. Equipement selon l'une quelconque des revendications 1 ou 2, **caractérisé en ce que** la couche tubulaire (27) de matériau isolant est réalisée en laine de roche.

4. Equipement selon la revendication 3, **caractérisé en ce que** la couche tubulaire (27) de matériau isolant est réalisée en laine de roche ayant une densité de 90 kg/m³.

5. Equipement selon l'une quelconque des revendications 1 à 4, **caractérisé en ce que** l'épaisseur de la paroi du cylindre (27) est comprise entre 8 et 15 cm.

6. Equipement selon l'une quelconque des revendications 1 à 5, **caractérisé en ce que** le diamètre externe du cylindre isolant (27) est de l'ordre de 40 à 45 cm.

7. Equipement selon l'une quelconque des revendications 1 à 6, **caractérisé en ce que** la hauteur (h) du cylindre isolant (27) est comprise entre 25 et 50 cm.

8. Equipement selon l'une quelconque des revendications 1 à 7, **caractérisé en ce que** les moyens de fermeture amovibles de la jaquette (28) consistent en des organes de crochetage (32) formés chacun d'un anneau (33) associé à un levier (34), lequel anneau (33), fixé sur l'une des bordures (30) de ladite jaquette (28), est adapté pour coopérer avec un crochet (35) fixé sur l'autre bordure (31).

9. Equipement selon l'une quelconque des revendications 1 à 7, **caractérisé en ce que** la face externe de la jaquette (28) comporte une poignée (35) pour faciliter sa manipulation.

10. Equipement selon la revendication 9, **caractérisé en ce que** la poignée (35) est réalisée par pliage d'une platine dont les extrémités sont soudées sur la jaquette (28).

## Patentansprüche

1. Ausrüstung, die dazu geeignet ist, um einen Leitungsabschnitt (4) herum, insbesondere um einen Abschnitt eines Rauchabzugsrohrs herum, angebracht zu werden, um dessen Isolation zu schaffen, wobei die Ausrüstung aus einer Isolierummantelung (7) besteht, die eine rohrförmige Schicht (27) aus isolierendem, zusammenpressbarem Material aufweist, die zum Umgeben des Rohrs (4) geeignet ist und aus zwei Halbschalen (27', 27") gebildet ist, wobei die Halbschalen (27', 27") mit einer Montagehülle (28) zusammenwirken, die aus einem flexiblen, zu einem offenen Zylinder geformten Metallblech besteht, das zwei freie Ränder (30, 31) aufweist, die mit abnehmbaren Verschlusselementen (32) versehen sind, **dadurch gekennzeichnet, dass** die Montagehülle (28) eine Höhe aufweist, die geringer als die Höhe des Isolierzylinders (27) ist, damit der Isolierzylinder (27) beiderseits übersteht.

2. Ausrüstung gemäss Anspruch 1, **dadurch gekennzeichnet, dass** die Höhe (h) des Isolierzylinders (27) einen Wert von 25 bis 50 cm aufweist und die Höhe der Montagehülle (28) demgegenüber um 2 bis 3 cm geringer ist.

3. Ausrüstung gemäss Anspruch 1 oder 2, **dadurch gekennzeichnet, dass** die Isolierummantelung (27) aus Steinwolle beseht.

4. Ausrüstung gemäss Anspruch 3, **dadurch gekennzeichnet, dass** die Isolierummantellung aus einer Steinwolle mit einer Dichte von 90 kg/m3 besteht.

5. Ausrüstung gemäss einem der Ansprüche 1 bis 4, **dadurch gekennzeichnet, dass** die Dicke der Wand des Isolierzylinders (27) einen Wert von 8 bis 15 cm aufweist.

6. Ausrüstung gemäss einem der Ansprüche 1 bis 5, **dadurch gekennzeichnet, dass** der Aussendurchmesser des Isolierzylinders (27) etwa 40 bis 45 cm beträgt.

7. Ausrüstung gemäss einem der Ansprüche 1 bis 6, **dadurch gekennzeichnet, dass** die Höhe (h) des Isolierzylinders (27) einen Wert von 25 bis 50 cm aufweist.

8. Ausrüstung gemäss einem der Ansprüche 1 bis 7, **dadurch gekennzeichnet, dass** die abnehmbaren Verschlussmittel der Montagehülle (28) aus einhakbaren Elementen (32) bestehen, von denen jedes von einer Öse (33) mit einem zugehörigem Hebel (34) gebildet ist, wobei die auf einem der Ränder (30) der Montagehülle (28) angebrachte Öse (33) zum Zusammenwirken mit einem auf dem anderen Rand (31) angebrachten Haken (35) ausgebildet ist.

9. Ausrüstung gemäss einem der Ansprüche 1 bis 7, **dadurch gekennzeichnet, dass** die Aussenseite der Montagehülle (28) zu ihrer einfacheren Handhabung einen Griff (35) aufweist.

10. Ausrüstung gemäss Anspruch 9, **dadurch gekennzeichnet, dass** der Griff (35) durch Falten einer Platine, deren Enden auf der Montagehülle festgeschweisst sind, gebildet ist.

## Claims

1. Equipment capable of being installed around a pipe section (4) for obtaining its insulation, especially around a smoke exhaust pipe section, said equipment being formed by an insulating shell (7) comprising a tubular layer (27) of insulating compressible material which is arranged for surrounding said pipe (4) and is formed of two half-shells (27', 27"), each being half cylindrical, said half-shells (27', 27") being associated to a maintaining collar (28) consisting of a flexible metal sheet shaped as an open cylinder and having two free edges (30, 31) provided with removable closure means (32), **characterised in that** said maintaining collar (28) has a height which is smaller than the height of said insulating cylinder (27), in order to allow the insulating cylinder (27) to extend beyond the collar at both ends.

2. Equipment according to claim 1, **characterised in that** the height (h) of the insulating cylinder (27) is between 25 and 50 cm, the height of the collar (28) being 2 to 3 cm less than that.

3. Equipment according to claim 1 or 2, **characterised in that** the tubular layer (27) of insulating material is made of rock wool.

4. Equipment according to claim 3, **characterised in that** the tubular layer (27) is made of rock wool having a density of 90 kg/m³.

5. Equipment according to anyone of claims 1 to 4, **characterised in that** the thickness of the wall of the cylinder (27) is between 8 and 15 cm.

6. Equipment according to anyone of claims 1 to 5, **characterised in that** the external diameter of the insulating cylinder (27) is in the order of 40 to 45 cm.

7. Equipment according to anyone of claims 1 to 6, **characterised in that** the height (h) of the cylinder is between 25 and 50 cm.

8. Equipment according to anyone of claims 1 to 7, **characterised in that** the removable closure means of the collar (28) consist of hooking means (32), each one being formed by a ring (33) associated to a lever (34), said ring (33), which is fixed on one of the edges (30) of the collar (28), being arranged for cooperating with a hook (35) fixed on the other edge (31).

9. Equipment according to anyone of claims 1 to 8, **characterised in that** the external surface of the collar (28) is provided with a handle (35) for simplifying its handling.

10. Equipment according to claim 9, **characterised in that** the handle (35) is obtained by bending a plate whose ends are soldered on the collar (28).
